# EUROPÄISCHE PATENTSCHRIFT

(11) **EP 0 944 892 B1**
(45) Veröffentlichungstag und Bekanntmachung des Hinweises auf die Patenterteilung: **16.08.2001**
(21) Anmeldenummer: 97952741.3
(22) Anmeldetag: 15.12.1997
(51) Int. Cl.: G08G 1/0968

(54) **VERFAHREN ZUR IDENTIFIKATION EINES ORTES, ENDGERÄT UND ZENTRALE**
METHOD FOR IDENTIFYING A PLACE, AND TERMINAL AND CENTRAL UNIT THEREFOR
PROCEDE PERMETTANT D'IDENTIFIER UN EMPLACEMENT, ET TERMINAL ET CENTRAL UTILISES A CET EFFET

(30) Priorität: 16.12.1996 DE 19653692; 24.11.1997 DE 19754336
(43) Veröffentlichungstag der Anmeldung: 29.09.1999
(73) Patentinhaber: MANNESMANN Aktiengesellschaft, 40213 Düsseldorf (DE)
(72) Erfinder: STANGIER, Peter, D-50389 Wesseling (DE); KOLB, Ralf, D-47877 Willich (DE)
(74) Vertreter: Meissner, Peter E., Dipl.-Ing.
(86) Internationale Anmeldenummer: DE9702972
(87) Internationale Veröffentlichungsnummer: WO9827531

(56) Entgegenhaltungen:
- WO-A-95/04340
- US-A- 5 072 395
- US-A- 5 191 532

## Beschreibung

Die Erfindung betrifft ein Verfahren zur Identifikation eines Ortes, ein Endgerät und eine Zentrale.

Die Identifizierung eines Ortes aufgrund einer Eingabe in ein Endgerät ist für unterschiedliche Zwecke einsetzbar. Insbesondere ist sie zur Identifizierung eines abgefragten Anfangsortes, Zielortes etc. zu einer gewünschten Route in einem Navigationsgerät zweckmäßig. Bei einer ferngesteuerten Navigation (offboard-Navigation) müssen die Angaben vom Endgerät an eine Zentrale übermittelt werden. Dabei können Ortsbezeichnungen sehr lang sein, so daß der Aufwand bei der Eingabe im Endgerät und der Aufwand zur Übermittlung vom Endgerät an eine Verkehrszentrale relativ groß ist. Einer Implementierung der Möglichkeit einer trunkierten (abgekürzten) Eingabe einer Ortsbezeichnung eines Ortes in ein Endgerät und einer Vervollständigung des abgekürzten Ortes aufgrund einer Adreßdatei im Endgerät steht entgegen, daß die Liste der Orte vollständig im Endgerät vorhanden sein müß und eine Korrektur oder Aktualisierung aufwendig ist. Einer Einzel-Zeichen-Eingabe mit jeweils sofortiger Übermittlung vom Endgerät an die Verkehrszentrale und Rückübermittlung von durch die bisher eingegebenen Zeichen identifizierbaren Orten ist aufgrund der erforderlichen Telekommunikation relativ teuer und bei paketvermittelter Datenübertragung wegen der Laufzeiten und der Laufzeitunterschiede unterschiedlicher Pakete technisch aufwendig und in der Bedienung unbequem; ein Grund hierfür ist in der relativ großen Positivliste (also Liste von Ortsbezeichnungen, welche mit der bisher am Endgerät eingegebenen Zeichenkette beginnen) zu sehen. Die Übertragung einer vollständigen Ortsbezeichnung ist jedoch bei der Eingabe fehlerträchtig und unbequem, bei der Übermittlung zeitaufwendig und teuer und überdies nicht notwendigerweise in der Darstellung kompatibel (Frankfurt a.M. oder Frankfurt am Main) zur Darstellung in einer Ortsbezeichnungsliste in der Zentrale.

Die US-A-5191532 offenbart ein Verfahren zur Identifizierung eines Namens mittels eines Endgerätes, wobei die Liste sämtlicher möglicher Namen im Endgerät abgelegt ist. Es wird eine Zeichenkette abgefragt und überprüft, ob die Anzahl der hierzu passenden Namen der Liste kleiner als eine vorbestimmte Maximalanzahl ist. Andernfalls muß ein weiteres Zeichen eingegeben werden.

Aufgabe der Erfindung ist deshalb die möglichst einfache, ergonomische, effiziente, fehlerunanfällige, Telekommunikationskosten sparende und dennoch zwischen Endgerät und Zentrale kompatible Identifizierung einer Ortsbezeichnung, insbesondere einer Ortsbezeichnung zu einer angefragten Route in ein Navigationsendgerät. Die Aufgabe wird durch die Gegenstände der unabhängigen Ansprüche gelöst.

Die Erfindung ermöglicht eine einfache, ergonomische, fehlerunanfällige, in der Übertragung günstige sowie trotzdem zwischen dem Endgerät und der Zentrale kompatible Identifizierung eines Ortes durch den Benutzer eines Endgerätes, insbesondere durch den Fahrer eines Fahrzeuges mit einem Navigations-Endgerät. Dabei wird im Endgerät kein derart großer Speicher wie bei einer vollständigen Speicherung aller Orte im Endgerät benötigt, so daß das Endgerät kostengünstig ausbildbar ist. Die Ortsbezeichnungsliste ist einfach aktualisierbar. Die Ortsbezeichnung eines Ortes kann beispielsweise eine Stadt, eine Straße, ein Teilbereich einer Straße, eine Kreuzung, eine geographische Angabe, wie ein Berg, Hügel, Tal, eine Brücke etc., ein Stadtteil, ein öffentliches Gebäude etc. sein. Sie ist insbesondere zur Identifizierung von einheitlich bezeichneten Orten, wie Städten oder Autobahnen, geeignet.

Eingegebene Zeichen können insbesondere Zahlen und/oder Buchstaben sein. Eine Zeichenkette, welche auch als String bezeichnet wird, ist die Aneinanderreihung der Zeichen, insbesondere in der Reihenfolge ihrer Eingabe. Die abgefragte Zeichenkette kann an unterschiedlichen Positionen in einer Ortsbezeichnung enthalten sein; insbesondere kann sie am Anfang einer Ortsbezeichnung enthalten sein; insbesondere kann sie mit dem Anfang von Ortsbezeichnungen verglichen werden. Die Positivliste ist eine Liste von Ortsbezeichnungen, welche in der Zentrale bekannt sind. Eine Ausnahmeliste ist eine Liste von Zeichenketten (-Eingaben), mit welchen zu viele Namen der Positionsliste beginnen, so daß die Rückübertragung aller dieser Namen der Positivliste von der Zentrale an das Endgerät zur Auswahl des gewünschten Namens hieraus zu umfangreich wäre.

Das Verfahren ist in unterschiedlichen Ausgestaltungen realisierbar. Die Positivliste ist zweckmäßig in der Zentrale gespeichert.

Die Ausnahmeliste kann im Endgerät und/oder in der Zentrale gespeichert sein. Die Feststellung, ob die abgefragte Zeichenkette in der Ausnahmeliste enthalten ist, kann in der Zentrale oder insbesondere im Endgerät erfolgen.

Die Übertragung vom Endgerät an die Zentrale erfolgt zweckmäßig per Funk, insbesondere per Mobilfunk. Insbesondere kann eine Paketvermittlung, insbesondere durch eine Kurznachricht, wie z.B. GSM-SMS, erfolgen.

Das Verfahren ist in einem Endgerät und/oder in einer Zentrale, insbesondere als Programm, realisierbar. Dabei werden im Endgerät bzw. in der Zentrale jeweils zumindest Programmteile zu dortigen Abfragen, zur Kommunikation und zum Zugriff auf dort abgespeicherte Daten implementiert. Welche Programmteile weiterhin wo realisiert werden, hängt von der konkreten Ausgestaltung des Verfahrens insbesondere nach obigen Unteransprüchen ab.

Weitere Merkmale und Vorteile der Erfindung ergeben sich aus der nachfolgenden Beschreibung eines Ausführungsbeispiels anhand der Zeichnung. Dabei zeigt:
- Fig. 1: ein grob abstrahiertes Flußdiagramm einer Realisierung des Verfahrens mit einer im Endgerät implementierten Ausnahmeliste,
- Fig. 2: ein Benutzer-Endgerät-Server(= Zentrale)-Kommunikationsteilprotokoll für ein Beispiel einer interaktiven Identifizierung eines Ortes,
- Fig. 3: ein Beispiel einer Ausnahmeliste für Ortsbezeichnungen in der Form von deutschen Städtenamen bei einer Maximalzeichenzahl von sechs Zeichen.

Ein Benutzer eines Endgerätes möchte einer mit dem Endgerät in Verbindung stehenden Zentrale durch Eingabe in das Endgerät einen Ortsnamen angeben. Hierzu ist eine eindeutige Identifizierung des vom Benutzer gemeinten Ortes in der Zentrale erforderlich. Eine derartige Eingabe und Identifizierung von Orten ist insbesondere bei der Verkehrsnavigation eines Fahrzeuges mit einem Endgerät durch eine Zentrale per Funk erforderlich; hierzu werden beispielsweise der Anfangsort und/oder der Zielort einer Route, zu welcher der Benutzer des Endgerätes eine Navigationshilfe der Zentrale über das Endgerät wünscht und/oder eine Eingabe des aktuellen Ortes, beispielsweise einer vom Benutzer am Straßenrand gelesenen Straße, eines Ortsschildes etc. zur Positionserfassung des Endgerätes abgefragt.

Bei verschiedenen Anwendungsfällen, wie bei der Eingabe einer Ortsbezeichnung im Fahrzeug bei der Navigation soll die Eingabe der Ortsbezeichnung möglichst kurz sein. Hierzu wird eine Zeichenkette am Endgerät abgefrägt. Beispielsweise können mehrere Zeichen hintereinander eingetippt oder durch Spracheingabe eingegeben werden und zu einer Zeichenkette zusammengesetzt werden oder eine Zeichenkette durch ihre Aussprache akustisch erfaßt werden etc.

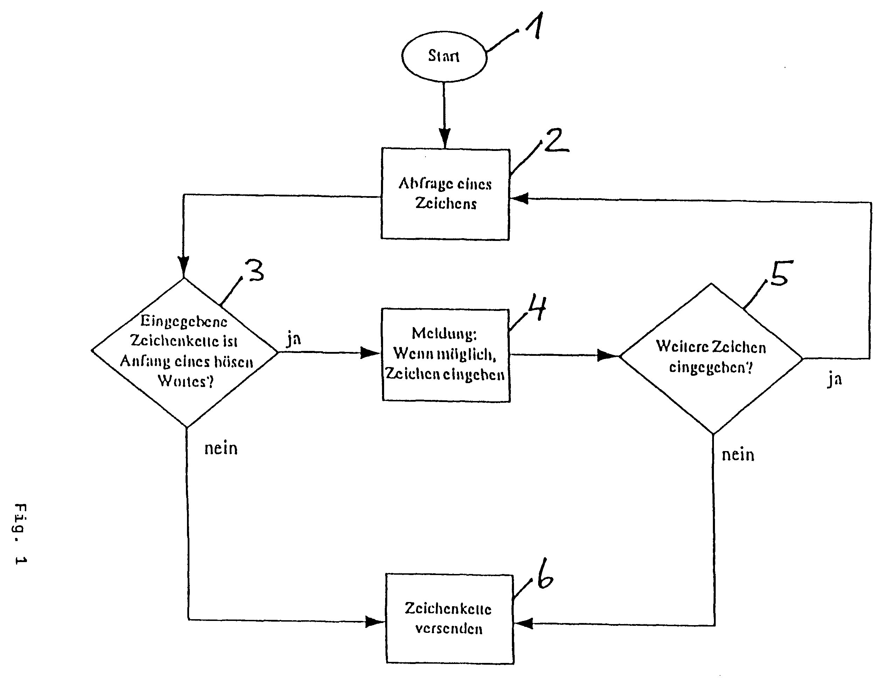

Figur 1 zeigt grob abstrahiert ein Beispiel einer Realisierung der interaktiven Abfrage eines Ortes zu seiner Identifizierung im Endgerät, wobei hier eine Ausnahmeliste (auch bezeichenbar als "Böseworteliste" von "bösen Worten") im Endgerät implementiert ist.

Das Programm startet am Start 1. Es wird zunächst im Schritt 2 ein Zeichen abgefragt. Hierauf wird im Schritt 3 überprüft, ob die abgefragte Zeichenkette in der (hier in der Zentrale enthaltenen) Ausnahmeliste von Zeichenketten, welche den Anfang von mehreren Namen bilden, enthalten ist. Wenn die bisher eingegebene Zeichenkette in der Ausnahmeliste enthalten ist, wird von der Zentrale das Endgerät aufgefordert, den Benutzer des Endgerätes zur Eingabe weiterer Zeichen aufzufordern. Wenn der Benutzer (in der Entscheidung 5 in Fig. 1) weitere Zeichen eingeben möchte, wird mit dem Schritt 2, also mit der Eingabe mindestens eines weiteren Zeichens fortgefahren. Der Wunsch, weitere Zeichen einzugeben, kann beispielsweise dadurch eingegeben werden (= "Ja" im Schritt 5), daß ein weiteres Zeichen eingegeben wird.

Wenn der Benutzer im Schritt 5 keine weiteren Zeichen eingeben möchte, also wenn er beispielsweise eine bestimmte Taste drückt, wird im Schritt 6 fortgefahren. Dabei werden hier alle Zeichenketten versandt, welche mit der bisher eingegebenen Zeichenkette beginnen; bei eingegebenen Zeichenketten, welche in der Ausnahmeliste enthalten sind, werden dies mehrere Zeichenketten sein. Eventuell können auch nur einige der Zeichenketten in einer Positivliste in der Zentrale, welche mit der eingegebenen Zeichenkette beginnen, übermittelt werden, und falls der Benutzer eine weitere mit der eingegebenen Zeichenkette beginnende Zeichenkette übermittelt haben möchte, in einem weiteren Schritt die weiteren Zeichenketten übermittelt werden. Aus den jeweils übermittelten Zeichenketten kann in einem hier nicht dargestellten Schritt der Benutzer des Endgerätes eine Zeichenkette auswählen.

Im dargestellten Fall hat ein Zeichen in der Ausnahmeliste die Länge 1, da bereits nach Abfrage eines Zeichens überprüft wird, ob das abgefragte Zeichen (= hier abgefragte Zeichenkette) in der Ausnahmeliste enthalten ist. Falls alle Zeichenketten in der Ausnahmeliste eine bestimmte Mindestlänge haben, kann zwischen Schritt 1 und 2 ein Schritt eingefügt werden, in welchem eine Mindestzahl von Zeichen abgefragt wird.

Im vorliegenden Fall ist die Ausnahmeliste, also die Liste mit Zeichenketten, mit welchen mehrere Namen-Zeichenketten beginnen, in der Zentrale gespeichert. Ferner ist hier auch die Positiv-Liste von Zeichenketten, also die Namensliste aller relevanten Namen in der Verkehrszentrale enthalten. Im Endgerät erfolgt also lediglich die Abfrage von Zeichen der eingegebenen Zeichenkette und die Darstellung von von der Zentrale an das Endgerät übermittelten eindeutigen oder auch mehreren Namen für den Benutzer.

Wieviele Namen mit einer eingebbaren Zeichenkette beginnen müssen, damit diese eingebbare Zeichenkette (also dieser Anfang von mehreren Namen) in einer Ausnahmeliste enthalten ist, hängt von unterschiedlichen Bedingungen, hier insbesondere vom Übertragungskanal, ab. Wenn beispielsweise effizient fünf infragekommenden, mit der eingegebenen Zeichenkette beginnende Namen (= Zeichenketten der Positiv-Liste) von der Zentrale an das Endgerät übermittelt werden können, ist es sinnvoll, Zeichenketten, mit welchen mehr als fünf Namen beginnen, in die Ausnahmeliste aufzunehmen.

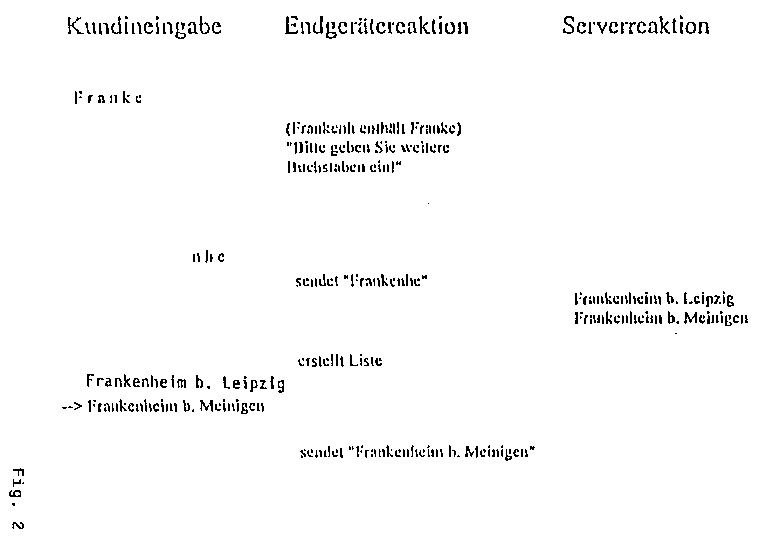

Figur 2 zeigt ein Beispiel der Kommunikation zwischen einem Endgerät-Benutzer (Kunde), einem Endgerät und einer Zentrale (= Server).

Im Beispiel in Figur 2 gibt der Benutzer des Endgerätes zunächst die Zeichen F, R, A, N, K, E ein. Diese Zeichen sind in einer Ausnahmeliste, welche hier im Endgerät enthalten ist, enthalten, da mit "Franke" zu viele Namen (hier Ortsbezeichnungen) beginnen. Deshalb wird der Benutzer zur Eingabe weiterer Zeichen des gewünschten Namens aufgefordert. Hierauf gibt der Benutzer des Endgerätes die Zeichen N, H, E ein, so daß die Eingabe-Zeichenkette auf "Frankenh" ergänzt wird. Diese Zeichenkette wird an die Zentrale übermittelt. Die Zentrale ermittelt aus der in der Zentrale vorliegenden Positiv-Liste diejenigen Namen (Zeichenketten), welche mit der eingegebenen Zeichenkette beginnen, also hier "Frankenheim bei Leipzig" und "Frankenheim bei Meiningen". Diese (hier zwei) Zeichenketten der Positiv-Liste werden von der Zentrale an das Endgerät übermittelt. Das Endgerät stellt die Liste der beiden infragekommenden Namen dem Kunden dar. Der Kunde wählt aus den beiden Namen den zweiten Namen, also Frankenheim bei Meiningen, aus. Das Endgerät übermittelt hierauf zur weiteren Verwendung den Ort "Frankenheim bei Meiningen" an die Zentrale, wo er geeignet weiterverwendet werden kann; insbesondere kann ein identifizierter Ort ein Zielort, Anfangsort etc. für eine Routenanfrage eines Endgerät-Benutzers bei der Zentrale sein.

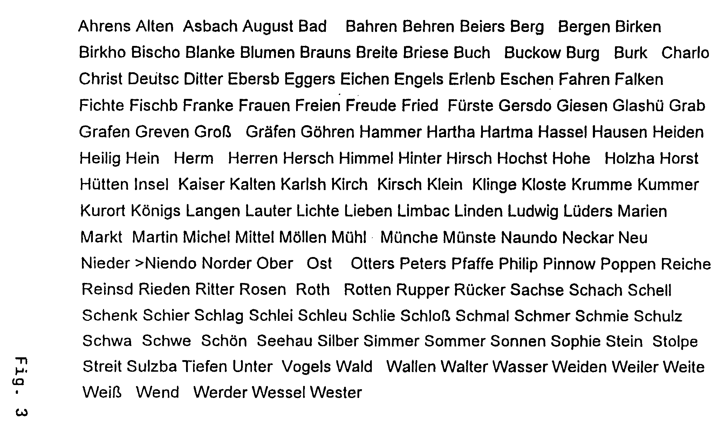

Figur 3 zeigt ein Beispiel einer Ausnahmeliste für das Beispiel deutscher Städtenamen, also Zeichenketten, mit welchen mehr als sechs deutsche Städtenamen beginnen. Die Länge der in der Ausnahmeliste in Figur 3 enthaltenen Zeichenketten ist hier unterschiedlich.

## Patentansprüche

1. Verfahren zur Identifizierung eines Namens mittels eines Endgerätes, insbesondere zur Identifizierung eines abgefragten Namens eines Anfangsortes oder Zielortes oder aktuellen Ortes einer Route in einem Navigationsendgerät,
aufgrund mehrerer im Endgerät als Zeichenkette abgefragter Zeichen, die Bestandteil des Namens sind,
wobei festgestellt wird, ob die abgefragte Zeichenkette dem Anfang einer in einer Ausnahmeliste enthaltenen Zeichenkette entspricht, welche letztere Zeichenkette in mehreren Namen enthalten ist,
- wobei bei einer Feststellung, daß die abgefragte Zeichenkette in der Ausnahmeliste enthalten ist, der Benutzer aufgefordert wird, weitere Zeichen des Namens einzugeben,
- während bei einer Feststellung, daß die abgefragte Zeichenkette nicht in der Ausnahmeliste enthalten ist, ein Verfahren zur eindeutigen Identifizierung ohne Eingabe weiterer Zeichen des Namens eingeleitet wird.

2. Verfahren nach Anspruch 1,
dadurch gekennzeichnet,
daß das Verfahren zur eindeutigen Identifizierung umfaßt, daß von einer Zentrale, in welche in einer Positiv-Liste alle relevanten Namen enthalten sind, der zu identifizierenden Name mittels der durch das Endgerät abgefragten Zeichenkette abgefragt wird.

3. Verfahren nach einem der vorhergehenden Ansprüche,
dadurch gekennzeichnet,
daß in der Ausnahmeliste Zeichenketten enthalten sind, die die Anfänge von so vielen Namen bilden, daß eine Übertragung dieser Namen von einer Zentrale an ein Endgerät einen über einem Grenzwert liegenden Aufwand bedingen würde.

4. Verfahren nach Anspruch 3,
dadurch gekennzeichnet,
daß in der Ausnahmeliste Zeichenketten enthalten sind, die die Anfänge von fünf Namen oder sechs Namen bilden.

5. Verfahren nach einem der vorhergehenden Ansprüche,
dadurch gekennzeichnet,
daß bei einer Feststellung, daß die abgefragte Zeichenkette nicht in der Ausnahmeliste enthalten ist, aber dennoch nicht einen Namen eindeutig identifiziert, alle Namen aus einer Positiv-Liste aus einer Zentrale an ein Endgerät übermittelt werden, die mit der eingegebenen Zeichenkette beginnen.

6. Verfahren nach einem der Ansprüche 2-5,
dadurch gekennzeichnet,
daß bei einer Feststellung, daß die abgefragte Zeichenkette in der Ausnahmeliste enthalten ist, dann, wenn der Endgerät-Benutzer keine weiteren Zeichen des von ihm gewünschten Namen eingibt, zumindest ein Teil der mit der abgefragten Zeichenkette beginnenden Namen aus einer Positiv-Liste der Zentrale an das Endgerät zur weiteren Auswahl übermittelt wird.

7. Verfahren nach einem der Ansprüche 5 oder 6,
dadurch gekennzeichnet,
daß die Positiv-Liste in der Zentrale gespeichert ist.

8. Verfahren nach einem der vorhergehenden Ansprüche,
dadurch gekennzeichnet,
daß die Ausnahmeliste im Endgerät gespeichert ist.

9. Verfahren nach einem der vorhergehenden Ansprüche,
dadurch gekennzeichnet,
daß die Feststellung, ob die abgefragte Zeichenkette in der Ausnahmeliste enthalten ist, im Endgerät erfolgt.

10. Verfahren nach einem der vorhergehenden Ansprüche,
dadurch gekennzeichnet,
daß die Zeichenketten in der Ausnahmeliste bis zu sieben Zeichen enthalten.

11. Verfahren nach einem der Ansprüche 2-10,
dadurch gekennzeichnet,
daß die Übermittlung vom Endgerät an die Zentrale und/oder von der Zentrale an das Endgerät per Funk, insbesondere per Mobilfunk, erfolgt.

12. Verfahren nach einem der Ansprüche 2-11,
dadurch gekennzeichnet,
daß die Übermittlung vom Endgerät an die Zentrale und/oder von der Zentrale an das Endgerät durch Paketvermittlung erfolgt.

13. Verfahren nach einem der Ansprüche 2-12,
dadurch gekennzeichnet,
daß die Übermittlung vom Endgerät an die Zentrale und/oder von der Zentrale an das Endgerät per Kurznachricht, insbesondere GSM-SMS, erfolgt.

14. Endgerät mit einem Speicher, mit einem im Speicher gespeicherten Programm zur Durchführung des Verfahrens nach einem der vorhergehenden Ansprüche, mit einem Prozessor zum Bearbeiten des Programms, mit einer Kommunikationseinrichtung zum Kommunizieren mit der Zentrale.

15. Endgerät nach Anspruch 14,
dadurch gekennzeichnet,
daß im Endgerät eine gespeicherte Ausnahmeliste vorgesehen ist.

## Claims

1. A method for identifying a name by means of a terminal, in particular for identifying a searched name of a starting point or destination or current location on a route in a navigation terminal,
on the basis of several characters searched in the terminal in the form of a string, which characters are components of the name,
wherein it is established whether the searched string corresponds to the beginning of a string included in a list of exceptions, which latter string is contained in several names,
- wherein, if it is established that the searched string is included in the exceptions list, the user is requested to input additional characters of the name,
- while, if it is established that the searched string is not included in the exceptions list, a method of clear identification without the input of further characters of the name is initiated.

2. A method according to claim 1,
characterised in that
the method for clear identification consists in the fact that the name to be identified is searched using the string searched by the terminal by a central exchange in which all relevant names are included in a positive list.

3. A method according to one of the preceding claims,
characterised in that
strings are contained in the exceptions list which form the beginnings of so many names that transmission of these names from a central exchange to a terminal would require effort above a limit value.

4. A method according to claim 3,
characterised in that
strings are included in the exceptions list which form the beginnings of five names or six names.

5. A method according to one of the preceding claims,
characterised in that,
if it is established that the searched string is not included in the exceptions list, but nonetheless does not clearly identify a name, all the names from a positive list which begin with the input string are transmitted from a central exchange to a terminal.

6. A method according to one of claims 2 to 5,
characterised in that,
if it is established that the searched string is contained in the exceptions list, where the terminal user does not input any further characters of the name he/she desires, at least some of the names beginning with the searched string are transmitted from a positive list in the central exchange to the terminal for further selection.

7. A method according to one of claims 5 or 6,
characterised in that
the positive list is stored in the central exchange.

8. A method according to one of the preceding claims,
characterised in that
the exceptions list is stored in the terminal.

9. A method according to one of the preceding claims,
characterised in that
it is established in the terminal whether the searched string is included in the exceptions list.

10. A method according to one of the preceding claims,
characterised in that
the strings in the exceptions list contain up to seven characters.

11. A method according to one of claims 2 to 10,
characterised in that
transmission from the terminal to the central exchange and/or from the central exchange to the terminal proceeds by radio, in particular by cellular radio.

12. A method according to one of claims 2 to 11,
characterised in that
transmission from the terminal to the central exchange and/or from the central exchange to the terminal proceeds by packet switching.

13. A method according to one of claims 2 to 12,
characterised in that
transmission from the terminal to the central exchange and/or from the central exchange to the terminal proceeds by short-messaging, in particular GSM/SMS.

14. A terminal having a memory, a program stored in the memory for carrying out the method according to one of the preceding claims, a processor for processing the program and a communication means for communicating with the central exchange.

15. A terminal according to claim 14,
characterised in that
a stored exceptions list is provided in the terminal.

## Revendications

1. Procédé pour identifier un nom au moyen d'un terminal, en particulier pour identifier un nom appelé d'un lieu de départ ou d'un lieu de destination ou d'un lieu actuel d'un itinéraire dans un terminal de navigation, sur la base de plusieurs caractères appelés dans le terminal comme chaîne de caractères, qui font partie du nom, où il est déterminé si la chaîne de caractères appelée correspond au début d'une chaîne de caractères contenue dans une liste discriminatoire, laquelle dernière chaîne de caractères est contenue dans plusieurs noms,
- lors d'une détermination que la chaîne de caractères appelée est contenue dans la liste discriminatoire, l'utilisateur ayant besoin d'entrer d'autres caractères du nom,
- tandis que, lors d'une détermination que la chaîne de caractères appelée n'est pas contenue dans la liste discriminatoire, un procédé pour l'identification univoque sans entrer d'autres caractères du nom est engagé.

2. Procédé selon la revendication 1,
caractérisé en ce que le procédé pour l'identification univoque comporte le fait que, à partir d'une centrale, dans laquelle tous les noms pertinents sont contenus dans une liste positive, le nom à identifier est appelé au moyen de la chaîne de caractères appelée par le terminal.

3. Procédé selon une des revendications précédentes,
caractérisé en ce que, dans la liste discriminatoire, sont contenues des chaînes de caractères qui forment les débuts de si nombreux noms qu'un transfert de ces noms d'une centrale à un terminal entraînerait un coût dépassant une valeur limite.

4. Procédé selon la revendication 3,
caractérisé en ce que, dans la liste discriminatoire, sont contenues des chaînes de caractères qui forment les débuts de cinq noms ou six noms.

5. Procédé selon une des revendications précédentes,
caractérisé en ce que, lors d'une détermination que la chaîne de caractères appelée n'est pas contenue dans la liste discriminatoire, mais cependant n'identifie pas de façon univoque un nom, tous les noms sont transmis d'une liste positive d'une centrale à un terminal, qui commencent par la chaîne de caractères entrée.

6. Procédé selon une des revendications 2 - 5,
caractérisé en ce que, lors d'une détermination que la chaîne de caractères appelée est contenue dans la liste discriminatoire, alors, lorsque l'utilisateur du terminal n'entre aucun autre caractère du nom souhaité par lui, au moins une partie des noms commençant par la chaîne de caractères appelée est transmise d'une liste positive de la centrale au terminal pour la sélection ultérieure.

7. Procédé selon une des revendications 5 ou 6,
caractérisé en ce que la liste positive est mémorisée dans la centrale.

8. Procédé selon une des revendications précédentes,
caractérisé en ce que la liste discriminatoire est mémorisée dans le terminal.

9. Procédé selon une des revendications précédentes,
caractérisé en ce que la détermination concernant le fait de savoir si la chaîne de caractères appelée est contenue dans la liste discriminatoire, est effectuée dans le terminal.

10. Procédé selon une des revendications précédentes,
caractérisé en ce que les chaînes de caractères dans la liste discriminatoire contiennent jusqu'à sept caractères.

11. Procédé selon une des revendications 2 - 10,
caractérisé en ce que le transfert du terminal à la centrale et/ou de la centrale au terminal est effectué par radiophonie, en particulier par radiotéléphonie mobile.

12. Procédé selon une des revendications 2 - 11,
caractérisé en ce que le transfert du terminal à la centrale et/ou de la centrale au terminal est effectué par communication par paquets.

13. Procédé selon une des revendications 2 - 12,
caractérisé en ce que le transfert du terminal à la centrale et/ou de la centrale au terminal est effectué par message court, en particulier GSM-SMS.

14. Terminal comportant une mémoire, ayant un programme, mémorisé dans la mémoire, pour la mise en oeuvre du procédé selon une des revendications précédentes, comportant un processeur pour le traitement du programme, et un dispositif de communication pour communiquer avec la centrale.

15. Terminal selon la revendication 14,
caractérisé en ce que, dans le terminal, il est prévu une liste discriminatoire mémorisée.
